# EUROPÄISCHE PATENTSCHRIFT

(11) **EP 2 712 848 B1**
(45) Veröffentlichungstag und Bekanntmachung des Hinweises auf die Patenterteilung: **29.11.2017**
(21) Anmeldenummer: 12006738.4
(22) Anmeldetag: 27.09.2012
(51) Int. Cl.: C03B 37/018, C03B 37/027, C03C 3/06, C03B 23/047, C03B 37/014, C03B 19/14

(54) **Wasserstoff unterstützte Fluorierung von Sootkörpern**
Hydrogen-assisted fluorination of soot bodies
Fluoration assistée par hydrogène de corps de noir de carbone

(43) Veröffentlichungstag der Anmeldung: 02.04.2014
(73) Patentinhaber: Heraeus Quarzglas GmbH & Co. KG, 63450 Hanau (DE)
(72) Erfinder: Trommer, Martin, 06749 Bitterfeld (DE); Schwerin, Malte, 06116 Halle (DE); Grimm, Stephan, 07743 Jena (DE); Froehlich, Frank, 07745 Jena (DE); Kirchhof, Johannes, 07749 Jena (DE)
(74) Vertreter: Heraeus IP

(56) Entgegenhaltungen:
- DE-A1- 10 138 046
- DE-A1-102004 059 804
- JP-A- 1 212 243
- JP-A- 1 219 034
- JP-A- 60 180 928
- US-A1- 2003 221 459
- US-A1- 2007 104 437
- US-A1- 2010 124 396
- US-B1- 6 265 115

## Beschreibung

Die Erfindung betrifft ein Verfahren zur Fluorierung eines Sootkörpers, fluorierte Sootkörper, die nach einem solchen Verfahren erhältlich sind sowie ein Verfahren zur Herstellung eines synthetischen Glases für ein optisches Element unter Einsatz des Fluorierungsverfahrens als auch Glas, das durch ein solches Herstellungsverfahren erhältlich ist.

Zur Herstellung von synthetischem Quarzglas für kommerzielle Anwendungen werden aus einer siliciumhaltigen Ausgangssubstanz in einem CVD-Verfahren (chemische Gasphasenabscheidung) durch Hydrolyse und/oder Oxidation SiO₂-Partikel erzeugt und diese auf einem Träger niedergeschlagen. Dabei kann zwischen Außenabscheldeverfahren und Innenabscheldeverfahren unterschieden werden. Bei den Außenabscheideverfahren werden SiO₂-Partikel auf der Außenseite eines rotierenden Trägers aufgebracht. Als Beispiele seien das sogenannte OVD-Verfahren (outside vapor phase deposition) oder das PECVD-Verfahren (plasma enhanced chemical vapor deposition) genannt. Als bekanntestes Beispiel für ein Innenabscheideverfahren steht das MCVD-Verfahren (modified chemical vapor deposition), bei dem auf der Innenwandung eines von außen erhitzten Rohres SiO₂-Partikel abgeschieden werden.

Bei hinreichend hoher Temperatur im Bereich der Trägeroberfläche kommt es zu einem unmitteibaren Verglasen der SiO₂-Partikel ("Direktverglasen").

Im Unterschied dazu wird bei dem sogenannten "Sootverfahren" die Temperatur während des Abscheidens der SiO₂-Partikel so niedrig, dass eine poröse Sootschicht erhalten wird, die in einem separaten Verfahrensschritt zu transparentem Glas gesintert wird. Ein Beispiel dafür ist das aus der DE 10 2007 024 725 A1 bekannte "OVD-Verfahren", bei dem einem Abscheidebrenner Brenngase in Form von Wasserstoff und Sauerstoff sowie eine siliciumhaltige Ausgangsverbindung zugeführt werden, die in einer dem Abscheidebrenner zugeordneten Brennerflamme zu SiO₂₋Partikeln umgesetzt wird, welche unter reversierenden Bewegungen des Abscheidebrenners entlang eines um seine Längsachse rotierenden Trägers schichtweise unter Bildung eines SiO₂₋Rohlings abgeschieden werden.
An synthetisches Quarzglas für den Einsatz in der Mikrolithografie oder für optische Bauteile in der Nachrichtentechnik werden hohe Anforderungen an die Brechzahl-Homogenität gestellt.
Der Einsatz von Fluor als Dotierungsmittel zur Absenkung des Brechungsindex von Quarzglas ist aus dem Stand der Technik bekannt. So beschreibt US 2001/0018835 die Herstellung von UV-festem, F-dotiertem Quarzglas, wobei Sootkörper in einer Atmosphäre aus Wasserstoff oder Sauerstoff erhitzt werden und in einem sich daran anschließenden Verfahrensschritt eine Sinterung in einer fluorhaltigen Atmosphäre erfolgt. Durch diese zweistufige Behandlung soll eine Verbesserung der UV-Transmission erreicht werden.
JP 63-225543 A beschreibt ein Fluordotieren und Verglasen einer porösen siliclumoxidenthaltenden Vorform mit dem Ziel strukturelle Defekte zu vermeiden.
EP 1 337 483 A1 beschreibt ein Verfahren zum Dehydrieren einer Sootform, wobei ein Sootkörper mit einer Gasmischung aus Chlor und Kohlenmonoxid beaufschlagt wird.
JP 62-176937 beschreibt ein Verfahren zur Herstellung von Fluor-dotiertem Quarzglas, wobei ein Sootkörper zunächst in einem ersten Schritt mit Silan (SiH₄) in einer sauerstoffarmen Atmosphäre behandelt wird, um Sauerstofffehlstellen zu erzeugen, die in einem nachgeschalteten Fluorierungsschritt zu einer verbesserten Ausbildung von SiF₄-Bildung führen soll. Hierdurch soll ein höherer Grad an Fluorierung in dem Siliciumoxid-Sootkörper erzielt werden. US-A-200321459 offenbart die Dotierung von Sootkörpern unter anderem mit CF4 oder C2F6 bei Temperaturen zwischen 900-1300°C, bevorzugt zwischen 1000-1275°C.

Um eine möglichst hohe und gleichmäßige Dotierung zu erreichen, muss für die SiO₂-Sootkörper ein Dotiergas eingesetzt werden, das in einem akzeptablen Temperaturfenster eine Reaktion des enthaltenden Fluors mit der SiO₂-Matrix ermöglicht und möglichst schnell in den Sootkörper eindiffundiert. Problematisch ist jedoch, dass bei hohen Dotiertemperaturen während des Dotierprozesses mit zunehmendem Dotierungsgrad eine Sinterung des Sootkörpers einsetzt. Dies hat zur Folge, dass sich Poren verschließen und die gewünschte Diffusion des Fluorierungsargens erschwert wird, was in Homogenitäten aufgrund der Vorsinterung sowie partiell deformierte Sootkörper zur Folge hat.

Es wurde gefunden, dass zur Fluorierung SiO₂-haltiger Sootkörper Tetrafluormethan und Hexafluorethan gut einsetzbar ist, da diese Fluorkohlenwasserstoffe im Unterschied zum gängigen Fluorierungsmittel SiF₄ gut handhabbar sind, keine Toxizität aufweisen und bei Raumtemperatur inert und zudem vergleichsweise preisgünstig sind. Nachteilig ist jedoch, dass der Einsatz von Tetrafluormethan oder Hexafluorethan relativ hohe Temperaturen für die thermische Zersetzung und der damit verbundenen Ausbildung einer reaktiven fluorhaltigen Spezies benötigt werden. Bei diesen hohen Temperaturen setzt jedoch bereits eine deutliche Sinterung des Sootkörpers ein, die wiederum einer homogenen Fluorierung entgegenwirkt. Außerdem hat sich gezeigt, dass bei Einsatz der Fluorkohlenwasserstoffe bei Temperaturen, die zur Erreichung von hohen Fluorgehalten im Glas nötig sind, Kohlenstoff, der sich in der Dotierapparatur, aber auch im Sootkörper abscheiden kann und im Extremfall zu einer Schwarzfärbung des Glases führt, entsteht. Das Entstehen von Ruß während der Fluorierung mit Tetrafluormethan oder Hexafluorethan wirkt sich nachteilig auf das Verfahren und die Qualität der daraus hergestellten Sootkörper bzw. des Quarzglases aus.

Es wurde nun überraschend gefunden, dass durch Zusatz von Wasserstoff zu den Fluorkohlenwasserstoffen Tetrafluormethan oder Hexafluorethan die Bildung reaktiver fluorhaltiger Spezies bereits bei deutlich niedrigeren Temperaturen erfolgt und eine verbesserte und homogenere Diffusion und damit Fluorierung in den Sootkörper bzw. des Sootkörpers erfolgt. Der Grund dafür ist möglicherweise die zusätzliche Bildung von HF, da dieses Molekül sehr klein ist und damit wesentlich besser in die Poren des Sootkörpers eindiffundieren kann, als das ebenfalls gebildete SiF₄. Gleichzeitig kann durch geeignete Auswahl eines Temperaturfensters die Rußbildung unterdrückt werden.

Ein erster Gegenstand der vorliegenden Erfindung ist ein Verfahren zur Fluorierung eines Sootkörpers umfassend die Schritte
a) Bereitstellen eines Sootkörpers und
b) Behandeln des Sootkörpers mit einer Gasmischung umfassend CₙF₂ₙ₊₂ mit n=1 oder 2 und Wasserstoff bei einer Temperatur im Bereich von (1280-n*250)°C bis (1220-n*100)°C.

Ein Sootkörper ist ein Körper, der bei einem sogenannten "Sootverfahren" hergestellt wird. Bei einem Sootverfahren wird die Temperatur während des Abscheidens der SiO₂-Partikel so niedrig gewählt, dass ein poröser Sootkörper entsteht, der in einem separaten Verfahrensschritt zu Quarzglas gesintert wird.

Im Allgemeinen ist die Struktur des SiO₂-Sootkörpers ausreichend gasdurchlässig, was eine gleichmäßige Gasphasenbehandlung oder Sinterung erleichtert. Im Bereich von Schichten mit höherer Dichte ist dies nur eingeschränkt möglich. Denn die Schichten stellen Diffusionsbarrieren dar, die bei Trocknungs- oder Sinterprozessen ein ungleichmäßiges Behandlungsergebnis verursachen können. Diese Problematik stellt sich wegen langer Diffusionswege insbesondere bei großvolumigen SiO₂-Sootkörpem.

Im Rahmen der vorliegenden Erfindung ist der Sootkörper vorzugsweise ein poröser SiO₂-Sootkörper, insbesondere ein Sootrohr, welches abgeschiedene SiO₂-Partikel umfasst.

Die Herstellung eines Sootkörpers kann dabei durch Hydrolyse und/oder Oxidation von siliciumhaltigen Ausgangssubstanzen zu SiO₂-Partikeln, die auf einem Träger niedergeschlagen werden, bewerkstelligt werden.

In einer bevorzugten Ausführungsform weist der Sootkörper eine mittlere Dichte von 0,48 g/cm³ bis 0,77 g/cm³ und vorzugsweise eine spezifische Oberfläche gemessen als BET-Oberfläche von größer 5 m²/g5 m²/g bis 25 m²/g auf.

Die nach dem Stand der Technik und/oder dem erfindungsgemäßen Verfahren hergestellten Sootkörper können eine Dichte aufweisen, die zwischen 22 - 35% der Dichte von Quarzglas beträgt, wobei eine Quarzglasdichte von 2,21 g/cm³ zugrunde gelegt wird. Die erzielte Dichte ist unter anderem abhängig von dem Abstand der Brenner zu der Ablagerungsfläche, der eingestellten Temperatur, der Stöchiometrie der Gase sowie der Geometrie der Brenner. Durch Variation dieser Faktoren können unterschiedliche Dichteverläufe innerhalb des Sootkörpers eingestellt werden, wie etwa lineare, ansteigende oder abfallende radiale Dichteverläufe in Sootkörpem. Zur Untersuchung der Dichteverteilung wird die lokale Dichte eines Sootkörpers mit bekannten Verfahren an ca. 700 Messpunkten ermittelt. Dazu werden mittels computertomografischer Verfahren 50 Schnittaufnahmen erstellt, die jeweils einen Schnitt quer zur Längsachse des Sootkörpers zeigen. Zur Bestimmung des radialen Dichteverlaufs werden in jedem der 50 computertomografischen Schnitte jeweils 14, etwa äquidistante Messpunkte aufgenommen. Mittels dieses Verfahrens kann der jeweils radiale Dichteverlauf entlang einer Schnittfläche durch den Sootkörper und auch ein Dichteprofil entlang der Längsachse des Sootkörpers bestimmt werden.

Der Mittelwert der Dichte M ergibt sich aus einer Mittelung über alle 50 Messpunkte, deren geometrische Position entlang der Längsachse des Sootkörpers variiert, nicht aber deren geometrischer Abstand zur Mittelachse. Bei durchschnittlichen Sootkörpern werden durch die computertomografischen Verfahren 50 Querschnitte durch den Sootkörper erzeugt, so dass sich der Mittelwert der Dichte aus einer Mittelung von jeweils 50 Dichtemessungen ergibt. Im Allgemeinen sind die Mittelwerte der Dichte jeweils normal verteilt, so dass eine Breite ρ bestimmt werden kann. Für die Bestimmung des radialen Dichteprofils werden in jedem der 50 Schritte jeweils 14 Messpunkte bestimmt, deren radialer Abstand zum Mittelpunkt des Sootkörpers zunimmt. Die Varianz Delta der Breite ρ des Mittelwertes M beinhaltet somit eine Statistik von 14 Punkten.

Bevorzugt erfolgt das das Herstellen des Sootkörpers dadurch, dass mittels mindestens einem, vorzugsweise mindestens zwei, Abscheidebrenner SiO₂-Partikel zum Masseauftrag auf einem um seine Längsachse rotierenden Träger abgeschieden werden.

In einer weiteren Ausführungsform kann das Abscheideverfahren auch mit einer Vielzahl von Abscheidebrennern erfolgen. Dafür wird zumindest ein erstes Einsatzmedium, das ein siliziumhaltiges Rohmedium enthält, ein zweites Einsatzmedium, das ein Brennmedium ist, und vorzugsweise ein drittes Einsatzmedium, das ein Unterstützungsgas ist, den jeweiligen Brennern zugeführt und es werden SiO₂-Partikel auf der Außenseite eines rotierenden Trägers abgeschieden. Dabei wird den Reaktionszonen der Abscheidebrenner, die im Wesentlichen aus den Brennerflammen bestehen, das siliziumhaltige Rohmedium zugeführt und dieses wird dabei durch Oxidation und/oder Hydrolyse und/oder Pyrolyse zu SiO₂-Partikeln umgesetzt, die sich unter Ausbildung des Sootkörpers auf dem Träger niederschlagen.

Das Brennmedium kann vorteilhaft ausgewählt sein aus Wasserstoff, Methan, Propan, Butan, Erdgas oder Mischungen hiervon.

Das siliziumhaltige Rohmedium gehört vorzugsweise zu der Gruppe der Siloxane oder Silane, insbesondere Chlorsilane. Als Chlorsilan kann insbesondere SiCl4 eingesetzt werden. Als Siloxane können insbesondere Verbindungen aus der Gruppe der Polyalkylsiloxane verwendet werden.

Im Rahmen der Erfindung umfasst der Begriff Polyalkylsiloxan sowohl lineare als auch zyklische Molekularstrukturen. Allerdings ist es bevorzugt, wenn das siliziumhaltige Rohmedium als Hauptbestandteil D4 - auch als OMCTS bezeichnet - aufweist. Die Notation D3, D4, D5 entstammt einer von General Electric Inc. eingeführten Notation, bei der "D" die Gruppe [(CH3)2Si]-0- repräsentiert. Somit beschreibt D3 Hexamethylcyclotrisiloxan, D4 Octamethylcyclotetrasiloxan, D5 Decamethylcyclopentasiloxan und D6 Dodecamethylcyclohexasiloxan. In einer bevorzugten Variante ist die Hauptkomponente des siliziumhaltige Rohmediums D4. So ist der Anteil an D4 mindestens 70 Gew.-%, insbesondere mindestens 80 Gew.-%, bevorzugt mindestens 90 Gew.-%, besonders bevorzugt mindestens 94 Gew.-% an dem siliziumhaltigen Rohmedium.
Als Unterstützungsgas kann bevorzugt ein Oxidationsmittel, beispielsweise Sauerstoff eingesetzt werden,
Es hat sich überraschend gezeigt, dass die Fluorierung der SiO₂-Sootkörper mit Tetrafluormethan oder Hexafluorethan weitestgehend rußfrei erfolgt, wenn die Fluorierung in einem definierten Temperaturfenster erfolgt und die Fluorierung mittels der Fluorkohlenstoffgase in Gegenwart von Wasserstoff erfolgt. Erfindungsgemäß erfolgt die Fluorierung durch Behandeln des Sootkörpers mit einer Gasmischung umfassend CₙF₂ₙ₊₂ mit n=1 oder 2 und Wasserstoff bei einer Temperatur im Bereich von (1280-n*250)°C bis (1220-n*100)°C.
Der Einsatz des Tetrafluormethans zusammen mit dem Wasserstoff erfolgt dabei bei etwas höherer Temperatur als die Fluorierung mit Hexafluorethan in Gegenwart von Wasserstoff.
In einer bevorzugten Ausführungsform erfolgt die Behandlung des Sootkörpers mit einer Gasmischung, die CF₄ und Wasserstoff umfasst in einem Temperaturbereich von 1050 bis 1120°C.

Die Behandlung des Sootkörpers mit einer Gasmischung, die C₂F₆ und Wasserstoff umfasst, erfolgt vorteilhaft in einem Temperaturbereich von 780 bis 1000°C, vorzugsweise von 850 bis 980°C.
Die für die Fluorierung des Sootkörpers eingesetzte Gasmischung umfassend CₙF₂ₙ₊₂ mit n=1 oder 2 und Wasserstoff wird bevorzugt verdünnt mit Inertgasen eingesetzt. Vorteilhaft umfasst die Gasmischung CₙF₂ₙ₊₂ mit n=1 oder 2 und Wasserstoff bis zu 65 Vol.-%, insbesondere 5 bis 35 Vol.-%, jeweils bezogen auf das Gesamtvolumen der Gasmischung bei 25°C.

Die Menge der Fluorkohlenstoffe C₂F₆ oder CF₄ in der Gasmischung ist bevorzugt 10 bis 60 Vol.-%, insbesondere 12 bis 35 Vol.-%, jeweils bezogen auf das Gesamtvolumen der Gasmischung bei 25°C.

Die Menge des Wasserstoffs in der Gasmischung wird bevorzugt möglichst gering gehalten um die Gefahr von Explosionen unter den gewählten Reaktionsbedingungen möglichst gering zu halten. Bevorzugt weist die Gasmischung Wasserstoff in einer Menge bis zu 15 Vol.-%, weiter bevorzugt bis zu 5 Vol.-%, insbesondere zwischen 1 und 4 Vol.-% und speziell zwischen 1 und 3 Vol.-%, jeweils bezogen auf das Gesamtvolumen der Gasmischung bei 25°C, auf. Grundsätzlich sind aber auch höhere Wasserstoffgehalte bis hin zum stöchometrisch umsetzbaren Anteil möglich, erfordern aber erheblichen Aufwand im Explosionsschutz.

Das Volumenverhältnis von CₙF₂ₙ₊₂ mit n=1 oder 2 zu Wasserstoff in der Gasmischung beträgt vorteilhaft 4:1 bis 1:4, insbesondere 3:1 bis 1:3 und speziell 2:1 bis 1:1.

Die Gasmischung kann darüber hinaus Inertgase aufweisen. Bevorzugte Inertgase sind Stickstoff oder Edelgase wie Argon oder Helium. Die Inertgase können bis zu 95 Vol.-% der Gasmischung ausmachen. In einer bevorzugten Ausführungsform des erfindungsgemäßen Verfahrens enthält die Gasmischung 35 bis 95 Vol.-%, insbesondere 70 bis 90 Vol.-%, jeweils bezogen auf das Gesamtvolumen der Gasmischung bei 25°C, Stickstoff.

In einer weiteren bevorzugten Ausführungsform ist die Gasmischung im Wesentlichen frei von Chlor oder Chlor-haltigen Verbindungen. Im Wesentlichen frei im Rahmen der vorliegenden Erfindung bedeutet, dass die Gasmischung weniger als 10000 ppm (parts per million bezogen auf das Gewicht), vorzugsweise weniger als 1000 ppm Chlor und/oder Chlor-haltige Verbindung aufweist.

Die Fluorierung des Sootkörpers kann in den dem Fachmann bekannten Reaktoren durchgeführt werden. Die Reaktoren sind üblicherweise so ausgelegt, dass sie über Vorrichtungen zur Gaszufuhr und Gasabfuhr als auch zur Druck- und Temperaturkontrolle verfügen. Die erfindungsgemäße Fluorierung des Sootkörpers findet bevorzugt unter einem Druck im innern des Reaktors statt, der unterhalb des Drucks außerhalb des Reaktors liegt. Durch den verringerten Innendruck im Reaktor kann ein Entweichen der Reaktionsgase aus dem Reaktor vermieden werden. Bevorzugt beträgt die Druckdifferenz zwischen dem Aussendruck (Druck ausserhalb des Reaktors) und dem Innendruck (Druck innerhalb des Reaktors, wo die Fluorierung des Sootkörpers stattfindet) mindestens 1 mbar, insbesondere mindestens 5 mbar, speziell mindestens 10 mbar, beispielsweise mindestens 50 mbar. Die Fluorierung erfolgt typischerweise bei einem Druck unterhalb des Atmosphärendrucks, vorzugsweise in einem Bereich von 800 mbar bis unterhalb von 1000 mbar, beispielsweise in einem Bereich von 850 bis 980 mbar.

Die Fluorierung des Sootkörpers erfolgt bevorzugt in einem kontinuierlichen Prozess, bei dem dem Reaktor während der Fluorierung des Sootkörpers kontinuierlich das erfindungsgemäß für die Behandlung des Sootkörpers vorgesehene Gasgemisch zugeführt wird. Je nach Reaktorgröße und Größe des Sootkörpers kann die Zuführung und Abführung des Gasgemisches hierzu beispielsweise in einem Bereich von 0,5 bis 50 l/min, vorzugsweise 5 bis 20 l/min erfolgen.

Je nach Größe und Gewicht des zu fluorierenden Sootkörpers erfolgt die Fluorierung gegebenenfalls über mehrere Stunden. Typischerweise beträgt die Dauer der Fluorierung des Sootkörpers 1 bis 24 Stunden, beispielsweise 3 bis 16 Stunden.

In einer vorteilhaften Ausführungsform des erfindungsgemäßen Fluorierungsverfahrens wird der Sootkörper vor dem Behandlungsschritt b) getrocknet Es hat sich gezeigt, dass die Fluorierung und die Qualität des erhaltenen Sootkörpers erheblich verbessert werden kann, wenn der Sootkörper zunächst getrocknet wird. Üblicherweise erfolgt die Trocknung des Sootkörpers bei Temperaturen im Bereich von 800 bis 1150 °C. Hierdurch werden Hydroxylgruppengehalte von 50 ppm bis 500 ppm erreicht.

Des Weiteren besteht die Möglichkeit zusätzlich zur thermischen Trocknung den Hydroyxlgruppengehalt durch Behandlung mit einem dehydrierenden Gas wie z.B. Chlor zu verringern. Dadurch können Hydroxylgruppengehalte von 0,1 ppm bis 20 ppm erzielt werden. Diese Gehalte können IR-spektroskopisch am transparenten Glas gemessen werden, das nach dem entsprechenden Trocknungsschritt durch Sinterung gewonnen wird.

Da das Fluor im Fluorierungsschritt mit den vorhandenen Hydroxylguppen reagieren kann, hat sowohl ihre Höhe und die räumliche Verteilung Einfluss auf die Fluorierung. Durch eine Trocknung mit Chlorierung wird ein sehr geringer gleichmäßiger OH-Gehalt im Sootkörper eingestellt, so dass auch die anschließende Fluorverteilung sehr homogen erfolgt. Allerdings kann kein so hoher Fluorgehalt erreicht werden wie mit ausschließlich thermischer Trocknung, bei der aber wiederum keine so gute Homogenität erreicht werden kann.

Die mit Hilfe des erfindungsgemäßen Fluorierungsverfahrens erhältlichen Sootkörper weisen eine homogene Fluorierung auf. Zudem weisen die derart erhältlichen Sootkörper keine durch Rußablagerungen bedingten Fehlstellen auf.

Ein weiterer Gegenstand der vorliegenden Erfindung ist daher ein fluorierter Sootkörper, der durch das erfindungsgemäße Fluorierungsverfahren erhältlich ist oder durch dieses Verfahren erhalten wird.

Das erfindungsgemäße Fluorierungsverfahren wird üblicherweise in einem Verfahren zur Herstellung synthetischen Glases für optische Elemente verwendet.

Ein weiterer Gegenstand der vorliegenden Erfindung ist daher ein Verfahren zur Herstellung eines synthetischen Glases für ein optisches Element umfassend die Schritte
i) Herstellen oder Bereitstellen eines Sootkörpers,
ii) Fluorieren des Sootkörpers gemäß dem erfindungsgemäßen Fluorierungsverfahren,
iii) gegebenenfalls Chlorierung des fluorierten Sootkörpers und
iv) Verglasen des fluorierten Sootkörpers bei einem Druck unterhalb von 0,1 bar, vorzugsweise unterhalb 10⁻² bar und einer Temperatur, die oberhalb der Fluorierungstemperatur liegt, vorzugsweise zwischen 1250°C bis 1500°C.

Die in Schritt i) des erfindungsgemäßen Herstellverfahrens beschriebene Herstellung oder Bereitstellung des Sootkörpers erfolgt wie in dem zuvor beschriebenen erfindungsgemäßen Fluorierungsverfahren.

Die Herstellung des Sootkörpers kann nach unterschiedlichen dem Fachmann bekannten Verfahren erfolgen. Bevorzugt erfolgt das Herstellen des Sootkörpers dadurch, dass mittels mindestens einem, vorzugsweise mindestens zwei Abscheidebrenner SiO₂-Partikel zum Masseauftrag auf einem um seine Längsachse rotierenden Träger abgeschieden werden.

Die in Schritt ii) des erfindungsgemäßen Herstellverfahrens beschriebene erfindungsgemäße Fluorierung erfolgt wie zuvor beschrieben. Die Behandlung des in Schritt i) bereitgestellten oder hergestellten Sootkörpers erfolgt wie in Schritt b) des erfindungsgemäßen Fluorierungsverfahrens.

In Schritt iii) der erfindungsgemäßen Herstellverfahrens kann zusätzlich ein Chlorierungsschritt des fluorierten Sootkörpers erfolgen. Die Chlorierung dient der Dehydratisierung des Sootkörpers, was zu einer weiteren Verbesserung der Qualität des Sootkörpers beziehungsweise des daraus herzustellenden synthetischen Glases führt. Die Chlorierung erfolgt bevorzugt durch eine Gasmischung, die Chlor enthält. In einer bevorzugten Ausführungsform enthält die Gasmischung für die Chlorierung 10 bis 25 Vol.-% Chlor bezogen auf das Gesamtvolumen der Gasmischung bei 25 °C. Die Gasmischung für die Chlorierung umfasst typischerweise zusätzlich Inertgase, vorzugsweise Stickstoff oder Argon. In einer weiteren bevorzugten Ausführungsform weist die Gasmischung für die Chlorierung 75 bis 90 Vol.-% Stickstoff, bezogen auf das Gesamtvolumen der Chlorgasmischung auf.

Die Chlorierung erfolgt vorzugsweise in einem Temperaturbereich von 750 bis 1100 °C. Die Dauer der Chlorierung ist abhängig von der Größe und der Form des Sootkörpers und kann dementsprechend variieren. Typischerweise erfolgt die Chlorierung über einen Zeitraum von 1 bis 24 Stunden, vorzugsweise 3 bis 16 Stunden.

Je nach Reaktorgröße und Größe des Sootkörpers kann die Zuführung und Abführung des Gasgemisches hierzu beispielsweise in einem Bereich von 0,5 bis 50 l/min, vorzugsweise 5 bis 20 l/min erfolgen.

In Schritt iv) erfolgt das Verglasen des fluorierten Sootkörpers bei einem Druck unterhalb von 0,1 bar, vorzugsweise unterhalb 10⁻² bar und einer Temperatur, die oberhalb der Fluorierungstemperatur liegt, vorzugsweise zwischen 1250°C bis 1500°C.

Beim erfindungsgemäßen Herstellverfahren wird das Sootrohr bevorzugt verglast, indem es unter Ausbildung einer nach innen wandernden Schmelzfront von außen erhitzt wird.

Das mit dem erfindungsgemäßen Herstellverfahren herzustellende synthetische Glas ist bevorzugt ein Glasrohr.

Das gemäß dem erfindungsgemäßen Herstellverfahren erhältliche Glas zeichnet sich durch eine besonders hohe Qualität aus und ist im Wesentlichen frei von Ruß.

Ein weiterer Gegenstand der vorliegenden Erfindung ist daher ein Glas, welches erhältlich ist oder erhalten wird durch das erfindungsgemäße Herstellverfahren.

Ein weiterer Gegenstand der Erfindung ist die Verwendung des erfindungsgemäßen Fluorierungsverfahrens oder des erfindungsgemäßen fluorierten Sootkörpers oder des erfindungsgemäßen Herstellverfahrens oder des erfindungsgemäßen Glases zur Herstellung optischer Elemente, insbesondere optischer Fasern.

Speziell erfolgt die Verwendung als optische Faser, indem das Glas unter Bildung eines Mantel- oder Substratrohres elongiert und vorzugsweise an der Innenwandung des Substratrohres beschichtet wird.

Der verglaste rohrförmige Sootkörper kann als sogenanntes Mantelrohr ("Jacketrohr") zur Ummantelung eines Kernstabs einer Vorform eingesetzt werden. Darüber hinaus kann der fluorierte Sootkörper wegen seines homogenen radialen Brechungsindexverlaufs auch zur Herstellung einer Vorform für optische Fasern eingesetzt werden, indem der Sootkörper verglast wird und unter Ausbildung eines Substratrohres elongiert und gegebenenfalls an der Innenseite des Substratrohres Kernmaterial mittels eines MCVD-Verfahrens oder mittels eines PCVD-Verfahrens abgeschieden wird.

Nach dem Verglasen und Elongieren weist das Substratrohr eine vorgegebene homogene Brechungsindexverteilung über der Rohrwandung auf. Das so hergestellte Substratrohr ist daher für die Herstellung von Vorformen, bei denen es auf definierte Brechzahl-Profile ankommt, besonders gut geeignet.

Eine weitere vorteilhafte Verwendungsmöglichkeit besteht darin, den fluorierten Sootkörper, bevorzugt das fluorierte Sootrohr, insbesondere nach einem Dehydratationsschritt, wie beispielsweise dem Chlorierungsschritt iii) im erfindungsgemäßen Herstellverfahren, und dem Verglasen als Mantelmaterial zur Herstellung einer Vorform für optische Fasern einzusetzen, indem ein sogenannter Kernstab bereitgestellt und von dem Glasrohr überfangen wird. Es ist hierbei vorteilhaft, wenn der Hydroxylgruppengehalt gering ist, was durch den Chlorierungsschritt (iii) erreicht werden kann.

### Beispiel:

In einem Laborversuch werden SiO₂-Sootkörper in Form von hohlen Kreiszylindern (Masse; 150 g; Innendurchmesser: 10 mm; Aussendurchmesser 45 mm; Länge 160 mm; Dichte 0,64 g/cm³) zunächst bei einer Temperatur von 900 °C für 12 Stunden bei einem Stickstoffgasfluss von 50 cm³/min getrocknet.

### Alternative 1: Fluorierung mit Hexafluorethan

Die Fluorierung des Sootkörpers erfolgt in einer ersten Alternative mit einer Gasmischung bestehend aus 5 Volumen-% (Vol.-%) C₂F₆, 5 Vol.-% Wasserstoff und 90 Vol.-% Stickstoff. Die Gasmischung wird mit einem Gasfluss von 50 cm³/min über einen Zeitraum von 3 Stunden bei 900 °C mit dem porösen Sootkörper in Berührung gebracht. Die Fluorierung erfolgt bei einem Reaktorinnendruck, der 5 mbar unterhalb des Reaktoraussendrucks, also dem Umgebungsatmosphärendruck liegt.

Anschließend wird das Fluorierungsgasgemisch entfernt und eine Chlorierung mit einer Gasmischung bestehend aus 20 Vol.-% Chlor und 80 Vol.-% Stickstoff bei einer Temperatur von 900 °C und einem Gasfluss von 50 cm³/min für 3 Stunden durchgeführt.

Der erhaltene Sootkörper zeigte eine homogene Fluorierung auf und keine Rückstände von Ruß. Ein anschließend aus dem Sootkörper erfindungsgemäß hergestelltes Glas zeigte ebenfalls kein Ruß sowie eine ausgesprochen hohe Qualität hinsichtlich des Fehlens optischer Fehlstellen.

### Alternative 2: Fluorierung mit Tetrafluormethan

Die Fluorierung des Sootkörpers erfolgt in einer zweiten Alternative mit einer Gasmischung bestehend aus 5 Volumen-% (Vol.-%) CF₄, 5 Vol.-% Wasserstoff und 90 Vol.-% Stickstoff. Die Gasmischung wird mit einem Gasfluss von 50 cm³/min über einen Zeitraum von 3 Stunden bei 900 °C mit dem porösen Sootkörper in Berührung gebracht. Die Fluorierung erfolgt bei einem Reaktorinnendruck, der 5 mbar unterhalb des Reaktoraussendrucks, also dem Umgebungsatmosphärendruck liegt.

Anschließend wird das Fluorierungsgasgemisch entfernt und eine Chlorierung mit einer Gasmischung bestehend aus 20 Vol.-% Chlor und 80 Vol.-% Stickstoff bei einer Temperatur von 900 °C und einem Gasfluss von 50 cm³/min für 3 Stunden durchgeführt.

Der erhaltene Sootkörper zeigte eine homogene Fluorierung auf und keine Rückstände von Ruß. Ein anschließend aus dem Sootkörper erfindungsgemäß hergestelltes Glas zeigte ebenfalls kein Ruß sowie eine ausgesprochen hohe Qualität hinsichtlich des Fehlens optischer Fehlstellen.

Zur Bestimmung des optimalen Temperaturfensters für die erfindungsgemäße Fluorierung wurden weitere Untersuchungen durchgeführt.

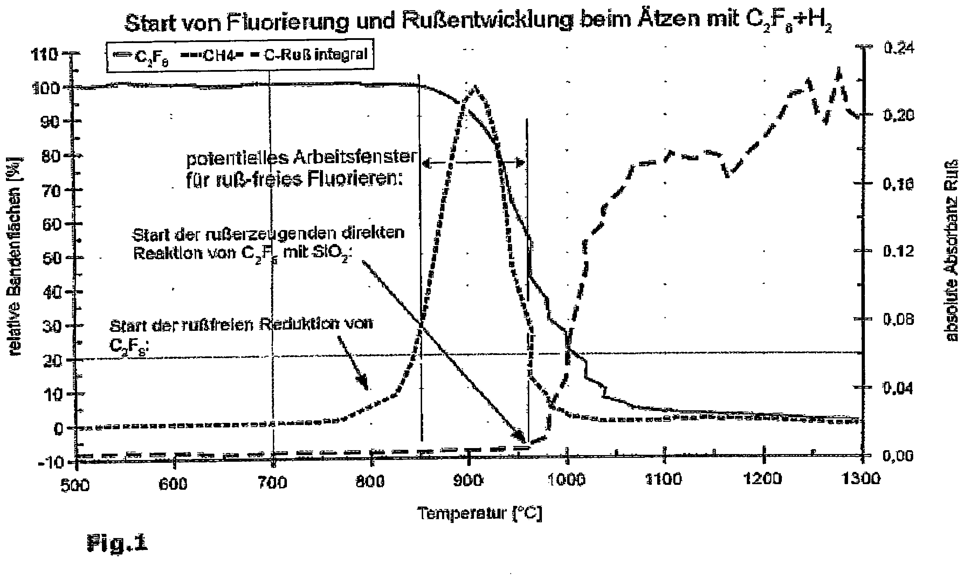

Gemäß der Alternative 1 wurde der Sootkörper zunächst vorgetrocknet und anschließend mit einer Gasmischung bestehend aus 5 Volumen-% (Vol.-%) C₂F₆, 5 Vol.-% Wasserstoff und 90 Vol.-% Stickstoff behandelt. Die Gasmischung wird mit einem Gasfluss von 50 cm³/min mit dem porösen Sootkörper in Berührung gebracht und die Temperatur kontinuierlich verändert (siehe Fig. 1). Die Gase, die dem Reaktor entnommen werden, wurden kontinuierlich in Abhängigkeit von der Reaktionstemperatur untersucht. Es zeigte sich überraschend, dass es für die Fluorierung mit Hexafluorethan ein kleines, aber hinsichtlich der Fluorierung hoch effizientes Temperaturfenster gibt, bei dem bereits eine starke Fluorierung einsetzt, aber noch keine Rußbildung zu beobachten ist.

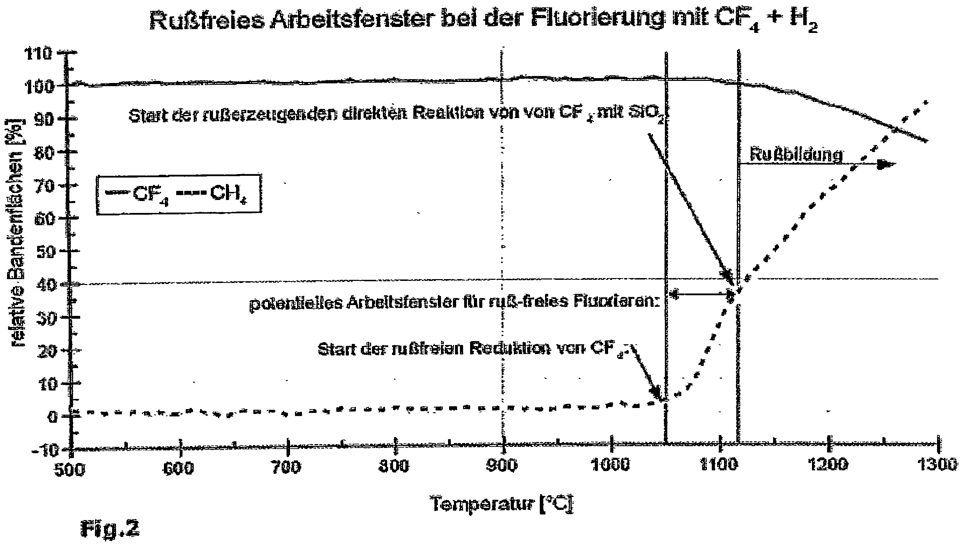

Entsprechend wurde gemäß der Alternative 2 der Sootkörper zunächst vorgetrocknet und anschließend mit einer Gasmischung bestehend aus 5 Volumen-% (Vol.-%) CF₄, 5 Vol.-% Wasserstoff und 90 Vol.-% Stickstoff behandelt. Die Gasmischung wird mit einem Gasfluss von 50 cm³/min mit dem porösen Sootkörper in Berührung gebracht und die Temperatur kontinuierlich verändert (siehe Fig. 2). Die Gase, die dem Reaktor entnommen werden wurden kontinuierlich in Abhängigkeit von der Reaktionstemperatur untersucht. Es zeigte sich überraschend, dass es für die Fluorierung mit Tetrafluormethan ein kleines, aber hinsichtlich der Fluorierung hoch effizientes, Temperaturfenster gibt, bei dem bereits eine starke Fluorierung einsetzt, aber noch keine Rußbildung zu beobachten ist.

## Patentansprüche

1. Verfahren zur Fluorierung eines Sootkörpers umfassend die Schritte
a) Bereitstellen eines Sootkörpers und
b) Behandeln des Sootkörpers mit einer Gasmischung umfassend CₙF₂ₙ₊₂ mit n=1 oder 2 und Wasserstoff bei einer Temperatur im Bereich von (1280-n*250)°C bis (1220-n*100)°C.

2. Verfahren gemäß Anspruch 1, **dadurch gekennzeichnet, dass** die Behandlung des Sootkörpers mit einer Gasmischung erfolgt, die CF₄ und Wasserstoff umfasst und in einem Temperaturbereich von 1050 bis 1120°C erfolgt.

3. Verfahren gemäß Anspruch 1, **dadurch gekennzeichnet, dass** die Behandlung des Sootkörpers mit einer Gasmischung erfolgt, die C₂F₆ und Wasserstoff umfasst und in einem Temperaturbereich von 780 bis 1000°C, vorzugsweise 850 bis 980°C, erfolgt.

4. Verfahren gemäß einem oder mehreren der vorangehenden Ansprüche, **dadurch gekennzeichnet, dass** die Gasmischung bis zu 65 Vol.-%, vorzugsweise 5 bis 35 Vol.-%, jeweils bezogen auf das Gesamtvolumen der Gasmischung bei 25°C, CₙF₂ₙ₊₂ mit n=1 oder 2 und Wasserstoff enthält.

5. Verfahren gemäß einem oder mehreren der vorangehenden Ansprüche, **dadurch gekennzeichnet, dass** die Gasmischung 10 bis 60 Vol.-%, vorzugsweise 12 bis 30 Vol.%, jeweils bezogen auf das Gesamtvolumen der Gasmischung bei 25°C, C₂F₆ oder CF₄ aufweist.

6. Verfahren gemäß einem oder mehreren der vorangehenden Ansprüche, **dadurch gekennzeichnet, dass** die Gasmischung 35 bis 95 Vol.-%, vorzugsweise 70 bis 90 Vol.-%, jeweils bezogen auf das Gesamtvolumen der Gasmischung bei 25°C, Stickstoff enthält.

7. Verfahren gemäß einem oder mehreren der vorangehenden Ansprüche, **dadurch gekennzeichnet, dass** die Gasmischung Wasserstoff in einer Menge von bis zu 15 Vol.-%, vorzugsweise bis zu 5 Vol.-%, insbesondere zwischen 1 und 4 Vol.-% und speziell zwischen 1 und 3 Vol.-%, jeweils bezogen auf das Gesamtvolumen der Gasmischung bei 25°C, aufweist.

8. Verfahren gemäß einem oder mehreren der vorangehenden Ansprüche, **dadurch gekennzeichnet, dass** der Sootkörper ein poröser SiO₂-Sootkörper ist, vorzugsweise ein Sootrohr, welches abgeschiedene SiO₂-Partikel umfasst, insbesondere mit einer mittleren Dichte von 0,48 g/cm³ bis 0,77 g/cm³ und einer spezifischen Oberfläche von größer 5 m²/g.

9. Verfahren zur Herstellung eines synthetischen Glases für ein optisches Element umfassend die Schritte
i) Herstellen oder Bereitstellen eines Sootkörpers,
ii) Fluorieren des Sootkörpers gemäß einem der Ansprüche 1 bis 8,
iii) optionale Chlorierung des fluorierten Sootkörpers und
iv) Verglasen des fluorierten Sootkörpers bei einem Druck unterhalb von 0,1 bar, vorzugsweise unterhalb 10⁻² bar und einer Temperatur, die oberhalb der Fluorierungstemperatur liegt, vorzugsweise zwischen 1250°C bis 1500°C.

10. Verfahren gemäß Anspruch 9, **dadurch gekennzeichnet, dass** das Herstellen des Sootkörpers dadurch erfolgt, dass mittels mindestens einem, vorzugsweise mindestens zwei, Abscheidebrenner SiO₂ Partikel zum Masseauftrag auf einem um seine Längsachse rotierenden Träger abgeschieden werden.

11. Verfahren gemäß Anspruch 9 oder 10, **dadurch gekennzeichnet, dass** das synthetische Glas ein Glasrohr ist.

## Claims

1. A method for fluorinating a soot body, comprising the steps of
a) providing a soot body, and
b) treating the soot body with a gas mixture comprising CₙF₂ₙ₊₂ with n = 1 or 2 and hydrogen at a temperature within a range from (1280-n*250) °C to (1220-n*100) °C.

2. The method in accordance with Claim 1, **characterised in that** the treatment of the soot body is achieved with a gas mixture comprising CF₄ and hydrogen und within a temperature range from 1050 to 1120 °C.

3. The method in accordance with Claim 1, **characterised in that** the treatment of the soot body is achieved with a gas mixture comprising C₂F₆ and hydrogen and within a temperature range from 780 to 1000 °C, preferably from 850 to 980 °C.

4. The method in accordance with one or more of the preceding claims, **characterised in that** the gas mixture contains up to 65 per cent by volume, preferably 5 to 35 per cent by volume, each in relation to the total volume of the gas mixture at 25°C, of CₙF₂ₙ₊₂ with n = 1 or 2 and hydrogen.

5. The method in accordance with one or more of the preceding claims, **characterised in that** the gas mixture contains 10 to 60 per cent by volume, preferably 12 to 30 per cent by volume, each in relation to the total volume of the gas mixture at 25 °C, of C₂F₆ or CF₄.

6. The method in accordance with one or more of the preceding claims, **characterised in that** the gas mixture contains 35 to 95 per cent by volume, preferably 70 to 90 per cent by volume, each in relation to the total volume of the gas mixture at 25°C, of nitrogen.

7. The method in accordance with one or more of the preceding claims, **characterised in that** the gas mixture contains hydrogen in an amount of up to 15 per cent by volume, preferably up to 5 per cent by volume, more preferably between 1 and 4 per cent by volume and specifically between 1 and 3 per cent by volume, each in relation to the total volume of the gas mixture at 25 °C.

8. The method in accordance with one or more of the preceding claims, **characterised in that** the soot body is a porous SiO₂ soot body, preferably a soot tube comprising deposited SiO₂ particles, more preferably having a medium density of 0.48 g/cm³ to 0.77 g/cm³ and a specific surface area of more than 5 m²/g.

9. A method for producing a synthetic glass for an optical element, comprising the steps of
i) making or providing a soot body,
ii) fluorinating the soot body in accordance with any one of Claims 1 to 8,
iii) optionally chlorinating the fluorinated soot body, and
iv) vitrifying the fluorinated soot body at a pressure of less than 0.1 bar, preferably of less than 10⁻², and at a temperature being in excess of the fluorination temperature, preferably between 1250 °C and 1500 °C.

10. The method in accordance with Claim 9, **characterised in that** the production of the soot body is achieved by using at least one, preferably at least two, deposition burners to deposit SiO₂ particles for mass application onto a carrier that is rotating about its longitudinal axis.

11. The method in accordance with Claim 9 or 10, **characterised in that** the synthetic glass is a glass tube.

## Revendications

1. Procédé de fluoration d'un corps de suie comprenant les étapes de
a) mise à disposition d'un corps de suie et
b) traitement du corps de suie avec un mélange gazeux comprenant CₙF₂ₙ₊₂ avec n = 1 ou 2 et de l'hydrogène à une température dans la plage de (1280-n*250)°C à (1220-n*100)°C.

2. Procédé selon la revendication 1, **caractérisé en ce que** le traitement du corps de suie s'effectue avec un mélange gazeux qui comprend du CF₄ et de l'hydrogène et s'effectue dans une plage de température de 1050 à 1120°C.

3. Procédé selon la revendication 1, **caractérisé en ce que** le traitement du corps de suie s'effectue avec un mélange gazeux qui comprend du C₂F₆ et de l'hydrogène et s'effectue dans une plage de température de 780 à 1000°C, de préférence 850 à 980°C.

4. Procédé selon une ou plusieurs des revendications précédentes, **caractérisé en ce que** le mélange gazeux contient jusqu'à 65 % en vol., de préférence 5 à 35 % en vol., à chaque fois par rapport au volume total du mélange gazeux à 25°C, de CₙF₂ₙ₊ₙ avec n = 1 ou 2 et de l'hydrogène.

5. Procédé selon une ou plusieurs des revendications précédentes, **caractérisé en ce que** le mélange gazeux présente 10 à 60 % en vol., de préférence 12 à 30 % en vol., à chaque fois par rapport au volume total du mélange gazeux à 25°C, de C₂F₈ ou CF₄.

6. Procédé selon une ou plusieurs des revendications précédentes, **caractérisé en ce que** le mélange gazeux contient 35 à 95 % en vol., de préférence 70 à 90 % en vol., à chaque fois par rapport au volume total du mélange gazeux à 25°C, d'azote.

7. Procédé selon une ou plusieurs des revendications précédentes, **caractérisé en ce que** le mélange gazeux présente de l'hydrogène en une quantité allant jusqu'à 15 % en vol., de préférence jusqu'à 5 % en vol., notamment entre 1 et 4 % en vol. et spécialement entre 1 et 3 % en vol., à chaque fois par rapport au volume total du mélange gazeux à 25°C.

8. Procédé selon une ou plusieurs des revendications précédentes, **caractérisé en ce que** le corps de suie est un corps de suie de SiO₂ poreux, de préférence un tube de suie qui comprend des particules de SiO₂ séparées, notamment avec une densité moyenne de 0,48 g/cm³ à 0,77 g/cm³ et une surface spécifique supérieure à 5 m²/g.

9. Procédé de fabrication d'un verre synthétique pour un élément optique comprenant les étapes de
i) fabrication ou mise à disposition d'un corps de suie,
ii) fluoration du corps de suite selon une des revendications 1 à 8,
iii) chloration optionnelle du corps de suie fluoré et
iv) vitrification du corps de suie fluoré à une pression en dessous de 0,1 bar, de préférence en dessous de 10⁻² bar et une température qui se situe au-dessus de la température de fluoration, de préférence entre 1250°C et 1500°C.

10. Procédé selon la revendication 9, **caractérisé en ce que** la fabrication du corps de suie s'effectue **en ce que** des particules de SiO₂ sont séparées pour l'enduit de masse sur un support rotatif autour de son axe longitudinal au moyen d'au moins un, de préférence d'au moins deux, brûleurs de séparation.

11. Procédé selon la revendication 9 ou 10, **caractérisé en ce que** le verre synthétique est un tube de verre.
